# EUROPÄISCHE PATENTSCHRIFT

(11) **EP 1 492 744 B1**
(45) Veröffentlichungstag und Bekanntmachung des Hinweises auf die Patenterteilung: **09.07.2008**
(21) Anmeldenummer: 03712015.1
(22) Anmeldetag: 14.03.2003
(51) Int. Cl.: C05G 3/00

(54) **VERFAHREN ZUM EINFÄRBEN VON DÜNGEMITTELN**
METHOD FOR COLOURING FERTILISERS
PROCEDE DE COLORATION D'ENGRAIS

(30) Priorität: 03.04.2002 DE 10214591
(43) Veröffentlichungstag der Anmeldung: 05.01.2005
(73) Patentinhaber: Clariant Produkte (Deutschland) GmbH, 65929 Frankfurt am Main (DE)
(72) Erfinder: HARZ, Andreas, 65824 Schwalbach (DE); MÜLLER, Olaf, 61462 Königstein (DE)
(86) Internationale Anmeldenummer: PCT/EP2003/002675
(87) Internationale Veröffentlichungsnummer: WO 2003/082776

(56) Entgegenhaltungen:
- EP-A- 1 160 292
- WO-A-97/19030
- US-A- 6 099 631

## Beschreibung

Gegenstand der vorliegenden Erfindung ist ein Verfahren zum Einfärben von Düngemitteln mit Pigmenten.

Zur Kennzeichnung von Düngemitteln ist eine Vielzahl von Farbstoffen, Farbstofflösungen oder Dispersionen bekannt. Häufig werden Solvent Farbstoffe verwendet, die in Öl gelöst dem Düngemittel zugesetzt werden. Solvent Farbstoffe weisen jedoch eine geringe Lichtechtheit und Farbstärke auf. Die Säure- und Alkalibeständigkeit ist schlecht. Es besteht eine Löslichkeitsgrenze des Farbstoffes in ÖI, womit eine niedrige Farbtiefe einher geht. Auch eine erhöhte Deckkraft wäre wünschenswert.

In der WO 97/19030 werden Düngemittelgemische mit anorganischen Pigmentpulvern, die geringe Mengen eines Öls enthalten, eingefärbt. Das Öl dient zum Entstauben der feinteiligen anorganischen Pigmentpulver.

Der vorliegenden Erfindung lag die Aufgabe zugrunde, ein Verfahren zum Einfärben von Düngemitteln bereitzustellen, wobei eine hohe Farbstärke, Lichtechtheit und Deckkraft erzielt wird, das ökotoxikologisch einwandfrei ist und im Anwendungsmedium eine hohe Säure- und Alkalibeständigkeit aufweist. Außerdem sollte die Zudosierung zum Anwendungsmedium nicht durch Löslichkeitsgrenzen limitiert sein.

Es wurde gefunden, dass eine Pigment-Präparation eines organischen oder anorganischen Pigments in einem Öl überraschenderweise die gestellten Anforderungen in hohem Maße erfüllt.

Gegenstand der vorliegenden Erfindung ist ein Verfahren zum Einfärben von Düngemitteln, dadurch gekennzeichnet, dass man eine Pigment-Präparation aus 5 bis 60 Gew.-% mindestens eines Pigments, 40 bis 95 Gew.-% eines Paraffinöls und/oder Pflanzenöls, 0 bis 10 Gew.-% eines Dispergiermittels oder Dispergiermittelgemisches und 0 bis 5 Gew.-% üblicher Zusatzstoffe, jeweils bezogen auf das Gesamtgewicht der Pigment-Präparation, herstellt, gegebenenfalls die Pigment-Präparation mit Paraffinöl und/oder Pflanzenöl verdünnt, und die Pigment-Präparation oder die verdünnte Pigment-Präparation auf das einzufärbende Düngemittel aufbringt.

In einer besonderen Ausführungsform des erfindungsgemäßen Verfahrens setzt man eine Pigment-Präparation ein, die 5 bis 40 Gew.-% mindestens eines organischen Pigments und 60 bis 95 Gew.-% eines Paraffinöls und/oder Pflanzenöls enthält.
In einer weiteren Ausführungsform des erfindungsgemäßen Verfahrens setzt man eine Pigment-Präparation ein, die 10 bis 60 Gew.-% mindestens eines anorganischen Pigmentes und 40 bis 90 Gew.-% eines Paraffinöls und/oder Pflanzenöls enthält.

Vorzugsweise wird eine Pigment-Präparation eingesetzt, die aus 10 bis 35 Gew.-%, insbesondere 15 bis 25 Gew.-%, mindestens eines organischen Pigments, 65 bis 90 Gew.-%, insbesondere 75 bis 85 Gew.-%, eines Paraffinöls und/oder Pflanzenöls, 0 bis 10 Gew.-% eines Dispergiermittels oder Dispergiermittelgemisches, sowie 0 bis 5 Gew.-% üblicher Zusatzstoffe besteht. Vorzugsweise wird weiterhin eine Pigment-Präparation eingesetzt, die aus 15 bis 50 Gew.-%, insbesondere 20 bis 40 Gew.-%, eines anorganischen Pigmentes, 50 bis 85 Gew.-%, insbesondere 60 bis 80 Gew.-%, eines Paraffinöls und/oder Pflanzenöls, 0 bis 10 Gew.-% eines Dispergiermittels oder Dispergiermittelgemisches, und 0 bis 5 Gew.-% üblicher Zusatzstoffe besteht.

Beispiele für organische Pigmente im Sinne der Erfindung sind Monoazopigmente, Disazopigmente, Disazokondensationspigmente, verlackte Azopigmente, Triphenylmethanpigmente, Thioindigopigmente, Thiazinindigopigmente, Perylenpigmente, Perinonpigmente, Anthanthronpigmente, Diketopyrrolopyrrolpigmente, Dioxazinpigmente, Chinacridonpigmente, Phthalocyaninpigmente, Isoindolinonpigmente, Isoindolinpigmente, Benzimidazolonpigmente, Naphtholpigmente und Chinophthalonpigmente. Insbesondere zu nennen sind saure bis alkalische Ruße aus der Gruppe Furnaceruße oder Gasruße.

Beispiele für anorganische Pigmente im Sinne der Erfindung sind Weißpigmente, Eisenoxidpigmente, Eisenblaupigmente, Chromoxidpigmente, Ultramarinpigmente, Mischphasenpigmente, Sulfid-/Sulfidselenidpigmente, Carbonatpigmente, Chromat-/ Chromat-Molybdatpigmente, Komplexsalzpigmente, Silicatpigmente, Glanzpigmente, Leuchtpigmente.

Unter Paraffinöl wird im Sinne der vorliegenden Erfindung ein dünnflüssiges Gemisch gesättigter aliphatischer Kohlenwasserstoffe mit einer Dichte zwischen 0,82 und 0,89 g/ml und einer Dynamischen Viskosität (bei 25°C) zwischen 25 und 80 mPas verstanden. Handelsübliche Paraffinöle, auch Weißöle genannt, die für das erfindungsgemäße Verfahren in Betracht kommen, können noch bis zu 40 % aromatische Kohlenwasserstoffe enthalten.

Unter Pflanzenölen werden im Sinne der vorliegenden Erfindung flüssige handelsübliche Öle aus Ölsaaten, wie z.B. Sonnenblumenöl, Olivenöl, Palmkernöl, Rapsöl, sowie Mischungen solcher Öle verstanden.

Unter Düngemitteln werden im Sinne der vorliegenden Erfindung überwiegend mineralische Kunstdünger, wie z.B. Stickstoff-, Phosphat-, Kali-, Kalk-, und Magnesium-Dünger, die mit organischen Düngern und/oder Spurenelementen vermischt sein können, verstanden.

Beispiele für Düngemittel, die nach dem erfindungsgemäßen Verfahren eingefärbt werden können, sind: Ammoniumsulfat, Ammoniumnitrat, Kalkammonsalpeter, Harnstoff, Harnstoff-Aldehyd-Kondensate, Stickstoffmagnesia, Ammonsulfatsalpeter, Kalksalpeter, Calciumcyanamid, Superphosphat, Doppel-, Tripelsuperphosphat, Thomasmehl, Thomasphosphat, Dicalciumphosphat, Kaliumchlorid, Kaliumsulfat, Kalimagnesia, Calciumcarbonat, Calciumoxid, sowie Gemische davon. Die genannten Düngemittel können auch mit organischen Polymeren oder Schwefel umhüllt sein.
Als Dispergiermittel eignen sich anionische, kationische und nichtionische grenzflächenaktive Verbindungen. Besonders bewährt haben sich Dispergiermittel, die eine oder mehrere mittel- oder langkettige Kohlenwasserstoffketten besitzen. Von der Vielzahl der Verbindungen soll an dieser Stelle nur eine Auswahl aufgeführt werden, ohne jedoch die Anwendbarkeit der erfindungsgemäßen Verbindungen auf diese Beispiele einzuschränken. Beispiele sind Alkylsulfate, Alkylsulfonate, Alkylphosphate, Alkylbenzolsulfonate wie Laurylsulfat, Stearylsulfat, Dodecylsulfonate, Octadecylsulfate, Dodecylsulfonate, Kondensationsprodukte aus Fettsäure und Taurin oder Hydroxyethansulfonsäure, Alkoxylierungsprodukte von Alkylphenolen, Ricinusölkolophoniumestern, Fettalkoholen, Fettaminen, Fettsäuren, und Fettsäureamiden, Umsetzungsprodukte aus Nonylphenol und kürzerkettigen, substituierten Alkylphenolen sowie deren polymeren Derivaten, z.B. Formaldehyd-Kondensationsprodukten sowie polymere Verbindungen wie z.B. Polyacrylate und deren Oxalkylate.

Als übliche Zusatzstoffe kommen Emulgatoren, Antiabsetzmittel, Antibackmittel, Netzmittel, Konservierungsmittel, Viskositätsstabilisatoren und Additive, welche die Rheologie beeinflussen, in Betracht. Als Antibackmittel werden insbesondere solche eingesetzt, die das Zusammenbacken der Düngemittelkörnchen verhindern.

Die erfindungsgemäß verwendete Pigment-Präparation kann hergestellt werden, indem das organische oder anorganische Pigment in Form eines Pulvers, Flushpaste, Presskuchens oder Granulats in Gegenwart der genannten Öle und gegebenenfalls Dispergiermittel und/oder üblicher Zusatzstoffe dispergiert wird. Falls Dispergiermittel und/oder Zusatzstoffe zugegeben werden, werden diese Komponenten vorzugsweise zunächst mit dem Öl vermischt, das Pigment eingerührt und je nach Kornhärte des eingesetzten Pigments mit Rührwerken, Dissolvern, Rotor-Stator-Mühlen, Kugelmühlen, Rührwerkskugelmühlen, wie Sand- und Perlmühlen, Schnellmischern, Knetapparaturen oder Hochleistungsperlmühlen dispergiert. Die erhaltene Pigment-Präparation wird gegebenenfalls mit dem genannten Öl weiter verdünnt. Die Verdünnung kann je nach gewünschter Farbintensität in weiten Grenzen schwanken, beispielsweise bis auf 1:100.

Zur erfindungsgemäßen Einfärbung des Düngemittels wird die vorstehend beschriebene Pigmentpräparation, gegebenenfalls nach vorheriger Verdünnung mit dem genannten Öl, zweckmäßigerweise in einer Menge von 0,00001 bis 0,10 Gew.-%, bevorzugt 0,001 bis 0,015 Gew.-%, insbesondere 0,005 bis 0,01 Gew.-%, bezogen auf das Gewicht des einzufärbenden Düngemittels, auf das Düngemittel appliziert. Dies kann beispielsweise durch Versprühen der Pigmentpräparation mit einer geeigneten Vorrichtung, wie z.B. einer Sprüh- oder Spritzmaschine, erfolgen. Die Pigmentpräparation kann aber auch direkt auf die Oberfläche des Kunstdüngers appliziert werden.

Sowohl bei der Verdünnung als auch bei der Applikation kann die Temperatur des Öls sowie der Pigment-Präparation zweckmäßigerweise zwischen 10 und 80°C liegen.

Bei Verwendung der beschriebenen ölhaltigen Pigment-Präparation erzielt man eine deutlich höhere Deckkraft, eine höhere Lichtechtheit, höhere Farbstärken, sowie ökologische Vorteile gegenüber Farbstoffen (da diese in der Regel kennzeichnungspflichtig sind), und eine deutlich bessere Säure- und Alkalibeständigkeit. Außerdem ist eine direkte Einarbeitung auf das Endprodukt möglich, wobei auf den Löseprozess verzichtet werden kann. Das Herstellen von Mischfarben ist im kalten Zustand möglich, da es sich um flüssige Präparationen handelt.

Ölhaltige Pigment-Präparationen können prinzipiell auch für die Pigmentierung von Schuhcreme, Kerzen, Wachsmalstiften, Knetmasse, Kosmetika, Anstrich- und Dispersionsfarben, Dispersionslacken, für Druckfarben, beispielsweise Textildruck-, Flexodruck- oder Tiefdruckfarben, für Tapetenfarben, für Holzschutzsysteme, für Viskose-Spinnfärbung, für Lacke, für Wurstdärme, für Saatgut, für Glasflaschen, für die Massefärbung von Dachziegeln, für Putze, für Holzbeizen, für Papiermassen, für Buntstiftminen, Faserschreiber, Tuschen, Pasten für Kugelschreiber, Kreiden, Wasch- und Reinigungsmittel, Schuhpflegemittel, Einfärbung von Latex-Produkten, Schleifmitteln sowie zum Einfärben von Kunststoffen und hochmolekularen Materialien, sowie als Farbmittel in elektrophotographischen Tonern und Entwicklern, wie z.B. Ein- oder Zweikomponentenpulvertonern, Magnettonern, Flüssigtonern, Polymerisationstonern sowie weiteren Spezialtonern, als Farbmittel in Ink-Jet-Tinten, insbesondere solchen auf nicht-wässriger Basis, Hot-melt- und Mikroemulsionstinten, eingesetzt werden.

### Beispiele

In den nachstehenden Beispielen wurde ein Weißöl folgender Spezifikation verwendet:

| | |
|---|---|
| Kinematische Viskosität bei 20°C: | 32 mm² /s |
| Dichte bei 20°C: | 848 kg/m³ |
| Fließpunkt: | -9°C |
| Brechungsindex bei 20°C: | 1,466 |
| Kohlenwasserstoffverteilung: | Paraffinisch 67 % |
| | Aromatisch 33 % |

### Beispiel 1:

25 Teile C.I. Pigment Red 112 sowie 75 Teile Weißöl wurden bei 30 bis 40°C mittels einer Perlmühle (Fa. Drais) mit 280 Teilen Zirkonoxidperlen (d = 1 mm) über mehrere Passagen gemahlen. Die Pigmentpräparation hat eine hohe Farbstärke mit sehr reinem Farbton, erweist sich gut fließfähig sowie als lagerstabil, d.h. die Probe bleibt trotz der Warmlagerung für 5 Wochen bei 50°C gut fließfähig.

Weitere Beispiele für Pigmentpräparationen:
2) 27 Teile Pigment Yellow 13 und 73 Teile Weißöl
3) 10 Teile Pigment Yellow 154 und 90 Teile Weißöl
4) 20 Teile Pigment Red 53:1 und 80 Teile Weißöl
5) 17 Teile Pigment Red 57:1 und 83 Teile Weißöl
6) 50 Teile Pigment Red 101 und 50 Teile Weißöl
7) 24 Teile Pigment Red 112 und 1,5 Teile Polyethylenwachs und 74,5 Teile Weißöl
8) 15 Teile C.I. Pigment Blue 15 und 85 Teile Weißöl
9) 20 Teile Pigment Blue 15:1 und 80 Teile Weißöl
10) 20 Teile Pigment Green 7 und 80 Teile Weißöl
11) 20 Teile Pigment Black 7 und 80 Teile Weißöl

Die in den Beispielen 1 bis 11 beschriebenen Pigmentpräparationen wurden mit Weißöl 1:10 verdünnt und mittels einer Sprühapparatur auf einen handelsüblichen NPK-Kunstdünger appliziert:

Die versprühte Menge variierte je nach gewünschter Farbintensität zwischen 1 und 1000 g Pigment-Präparation je Tonne Düngemittel.

## Patentansprüche

1. Verfahren zum Einfärben von Düngemitteln, **dadurch gekennzeichnet, dass** man eine Pigment-Präparation aus 5 bis 60 Gew.-% mindestens eines Pigments, 40 bis 95 Gew.-% eines Paraffinöls und/oder Pflanzenöls, 0 bis 10 Gew.-% eines Dispergiermittels oder Dispergiermittelgemisches und 0 bis 5 Gew.-% üblicher Zusatzstoffe, jeweils bezogen auf das Gesamtgewicht der Pigment-Präparation, herstellt, gegebenenfalls die Pigment-Präparation mit Paraffinöl und/oder Pflanzenöl verdünnt, und die Pigment-Präparation oder die verdünnte Pigment-Präparation auf das einzufärbende Düngemittel aufbringt.

2. Verfahren nach Anspruch 1, **dadurch gekennzeichnet, dass** die Pigment-Präparation 5 bis 40 Gew.-% mindestens eines organischen Pigments und 60 bis 95 Gew.-% eines Paraffinöls und/oder Pflanzenöls enthält.

3. Verfahren nach Anspruch 1, **dadurch gekennzeichnet, dass** die Pigment-Präparation 10 bis 60 Gew.-% mindestens eines anorganischen Pigmentes und 40 bis 90 Gew.-% eines Paraffinöls und/oder Pflanzenöls enthält.

4. Verfahren nach mindestens einem der Ansprüche 1 bis 3, **dadurch gekennzeichnet, dass** das Pigment ein organisches Pigment aus der Gruppe der Monoazopigmente, Disazopigmente, Disazokondensationspigmente, verlackten Azopigmente, Triphenylmethanpigmente, Thioindigopigmente, Thiazinindigopigmente, Perylenpigmente, Perinonpigmente, Anthanthronpigmente, Diketopyrrolopyrrolpigmente, Dioxazinpigmente, Chinacridonpigmente, Phthalocyaninpigmente, Isoindolinonpigmente, Isoindolinpigmente, Benzimidazolonpigmente, Naphtholpigmente, Chinophthalonpigmente, Furnaceruße oder Gasruße ist.

5. Verfahren nach mindestens einem der Ansprüche 1 bis 3, **dadurch gekennzeichnet, dass** das Pigment ein anorganisches Pigment aus der Gruppe der Weißpigmente, Eisenoxidpigmente, Eisenblaupigmente, Chromoxidpigmente, Ultramarinpigmente, Mischphasenpigmente, Sulfid-/Sulfidselenidpigmente, Carbonatpigmente, Chromat-/Chromat-Molybdatpigmente, Komplexsalzpigmente, Silicatpigmente, Glanzpigmente und Leuchtpigmente ist.

6. Verfahren nach mindestens einem der Anspüche 1 bis 5, **dadurch gekennzeichnet, dass** das Düngemittel ein mineralischer Kunstdünger aus der Gruppe der Stickstoff-, Phosphat-, Kali-, Kalk- und Magnesiumdünger ist.

7. Verfahren nach mindestens einem der Ansprüche 1 bis 6, **dadurch gekennzeichnet, dass** als üblicher Zusatzstoff ein Antiabsetzmittel, Antibackmittel, Netzmittel, Konservierungsmittel, Viskositätsstabilisator und/oder ein Additiv zur Beeinflussung der Rheologie eingesetzt wird.

8. Verfahren nach mindestens einem der Ansprüche 1 bis 7, **dadurch gekennzeichnet, dass** das Pigment in Form eines Pulvers oder Granulats in Gegenwart des Paraffinöls und/oder Pflanzenöls und gegebenenfalls des Dispergiermittels und/oder der üblichen Zusatzstoffe dispergiert wird.

9. Verfahren nach mindestens einem der Ansprüche 1 bis 8, **dadurch gekennzeichnet, dass** die Pigment-Präparation oder die verdünnte Pigment-Präparation in einer Menge von 0,00001 bis 0,10 Gew.-%, bezogen auf das Gewicht des einzufärbenden Düngemittels, auf das Düngemittel aufgebracht wird.

10. Verfahren nach Anspruch 9, **dadurch gekennzeichnet, dass** die Pigment-Präparation oder die verdünnte Pigment-Präparation auf die Oberfläche des Düngemittels aufgesprüht wird.

## Claims

1. A method for coloring fertilizers, which comprises the production of a pigment preparation comprising 5 to 60% by weight of at least one pigment, 40 to 95% by weight of a paraffin oil and/or vegetable oil, 0 to 10% by weight of a dispersant or dispersant mixture and 0 to 5% by weight of conventional additives, in each case based on the total weight of the pigment preparation, the optional dilution of the pigment preparation with paraffin oil and/or vegetable oil, and the application of the pigment preparation or diluted pigment preparation to the fertilizer to be colored.

2. The method as claimed in claim 1, wherein the pigment preparation comprises 5 to 40% by weight of at least one organic pigment and 60 to 95% by weight of a paraffin oil and/or vegetable oil.

3. The method as claimed in claim 1, wherein the pigment preparation comprises 10 to 60% by weight of at least one inorganic pigment and 40 to 90% by weight of a paraffin oil and/or vegetable oil.

4. The method as claimed in at least one of claims 1 to 3, wherein the pigment is an organic pigment from the group consisting of monoazo pigments, diazo pigments, diazo condensation pigments, laked azo pigments, triphenylmethane pigments, thio indigo pigments, thiazine-indigo pigments, perylene pigments, perinone pigments, anthanthrone pigments, diketopyrrolopyrrole pigments, dioxazine pigments, quinacridone pigments, phthalocyanine pigments, isoindolinone pigments, isoindoline pigments, benzimidazolone pigments, naphthol pigments, quinophthalone pigments, furnace blacks and gas blacks.

5. The method as claimed in at least one of claims 1 to 3, wherein the pigment is an inorganic pigment from the group consisting of white pigments, iron oxide pigments, iron blue pigments, chromium oxide pigments, ultramarine pigments, mixed phase pigments, sulfide/sulfide selenide pigments, carbonate pigments, chromate/chromate-molybdate pigments, complex salt pigments, silicate pigments, luster pigments and luminescent pigments.

6. The method as claimed in at least one of claims 1 to 5, wherein the fertilizer is a synthetic inorganic fertilizer from the group consisting of nitrogen, phosphate, potassium, calcium and magnesium fertilizers.

7. The method as claimed in at least one of claims 1 to 6, wherein a suspension agent, anticaking agent, wetting agent, preservative, viscosity stabilizer and/or additive for influencing the rheology is used as conventional additive.

8. The method as claimed in at least one of claims 1 to 7, wherein the pigment, in the form of a powder or granular material, is dispersed in the presence of the paraffin oil and/or vegetable oil and optionally of the dispersant and/or of the conventional additives.

9. The method as claimed in at least one of claims 1 to 8, wherein the pigment preparation or the diluted pigment preparation is applied to the fertilizer in an amount of 0.00001 to 0.10% by weight, based on the weight of the fertilizer to be colored.

10. The method as claimed in claim 9, wherein the pigment preparation or the diluted pigment preparation is sprayed onto the surface of the fertilizer.

## Revendications

1. Procédé de coloration d'engrais, **caractérisé en ce que** l'on prépare une préparation de pigments composée de 5% à 60% en poids d'au moins un pigment, de 40% à 95% en poids d'une huile de paraffine et/ou d'une huile végétale, de 0% à 10% en poids d'un dispersant ou d'un mélange de dispersants et de 0% à 5% en poids d'adjuvants habituels, chacun par rapport au poids total de la préparation de pigments, on dilue éventuellement la préparation de pigments avec de l'huile de paraffine et/ou une huile végétale et on réunit la préparation de pigments ou la préparation de pigments diluée avec l'engrais à colorer.

2. Procédé selon la revendication 1, **caractérisé en ce que** la préparation de pigments contient 5% à 40% en poids d'au moins un pigment organique et 60% à 95% en poids d'une huile de paraffine et/ou d'une huile végétale.

3. Procédé selon la revendication 1, **caractérisé en ce que** la préparation de pigments contient 10% à 60% en poids d'au moins un pigment inorganique et 40% à 90% en poids d'une huile de paraffine et/ou d'une huile végétale.

4. Procédé selon au moins l'une quelconque des revendications 1 à 3, **caractérisé en ce que** le pigment est un pigment organique choisi dans le groupe constitué par les pigments monoazoïques, les pigments diazoïques, les pigments de condensation diazoïques, les pigments azoïques laqués, les pigments triphénylméthane, les pigments thioindigo, les pigments thiazine-indigo, les pigments pérylène, les pigments périnone, les pigments anthanthrone, les pigments dicétopyrrolopyrrole, les pigments dioxazine, les pigments quinacridone, les pigments phtalocyanine, les pigments isoindolinone, les pigments isoindoline, les pigments benzimidazolone, les pigments naphtol, les pigments quinophtalone, le noir de fourneau ou le noir de fumée.

5. Procédé selon au moins l'une quelconque des revendications 1 à 3, **caractérisé en ce que** le pigment est un pigment inorganique choisi dans le groupe constitué par les pigments blancs, les pigments d'oxyde de fer, les pigments bleu de Prusse, les pigments d'oxyde de chrome, les pigments outremer, les pigments en phases mixtes, les pigments de sulfure/sulfo-séléniure, les pigments de carbonate, les pigments de chromate/chromate-molybdate, les pigments de sels complexes, les pigments de silicate, les pigments brillants et les pigments luminescents.

6. Procédé selon au moins l'une quelconques des revendications 1 à 5, **caractérisé en ce que** l'engrais est un engrais minéral synthétique choisi dans le groupe constitué par les engrais azotés, phosphatés; potassiques, calciques et magnésiques.

7. Procédé selon au moins l'une quelconque des revendications 1 à 6, **caractérisé en ce que** l'on utilise, en tant qu'adjuvant habituel, un agent de suspension, un agent antiagglomérant, un agent mouillant, un agent conservateur, un stabilisateur de viscosité et/ou un agent additif destiné à modifier la rhéologie.

8. Procédé selon au moins l'une quelconque des revendications 1 à 7, **caractérisé en ce que** le pigment est dispersé sous la forme d'une poudre ou de granulés en présence de l'huile de paraffine et/ou de l'huile végétale et éventuellement du dispersant et/ou des adjuvants habituels.

9. Procédé selon au moins l'une quelconque des revendications 1 à 8, **caractérisé en ce que** la préparation de pigments ou la préparation de pigments diluée est réunie avec l'engrais à raison de 0,00001 % à 0,10% en poids par rapport au poids de l'engrais à colorer.

10. Procédé selon la revendication 9, **caractérisé en ce que** la préparation de pigments ou la préparation de pigments diluée est pulvérisée sur la surface de l'engrais.
